# EUROPÄISCHE PATENTANMELDUNG

(11) **EP 0 943 239 A1**
(43) Veröffentlichungstag der Anmeldung: **22.09.1999**
(21) Anmeldenummer: 98108816.4
(22) Anmeldetag: 14.05.1998
(51) Int. Cl.: A01N 27/00

(54) **Citrusterpene enthaltendes Mittel**

(30) Priorität: 16.05.1997 DE 19720604
(71) Anmelder: pro-pack Handels- und Vertriebsgesellschaft mbH & Co. KG, 81373 München (DE); Äronix Produktion, Peter Magin und Axel Hoffmann GbR, 69226 Nussloch (DE)
(72) Erfinder: Sachtleben, Tobias, Dipl.-Agrar-Biologe, 82041 Deisenhofen (DE)
(74) Vertreter: Strych, Werner Maximilian Josef, Dr.

(57) **Zusammenfassung**

Beschrieben wird ein Citrusterpene enthaltendes Mittel sowie dessen Verwendung als Mittel zur Behandlung von biologischen Abfällen, insbesondere von in biologischen Abfällen gebildeten Schimmelpilzen, zum biologischen Pflanzenschutz und zur Bekämpfung schädlicher Insekten. Das erfindungsgemäße Mittel enthält von 40 bis 60 Gew.-% Citrusterpene, 15 bis 30 Gew.-% wasserlösliche Lösungsmittel, 10 bis 20 Gew.-% Tenside, 1 bis 5 Gew.-% quartäre Ammoniumverbindung und Rest Wasser.

## Beschreibung

Die Erfindung betrifft ein Citrusterpene enthaltendes Mittel sowie dessen Verwendung.

Durch gesetzliche Verordnung ist es festgelegt worden, daß biologische Abfälle, insbesondere Küchenabfälle wie Obstreste, Filtertüten, Teebeutel und Tee, Brot, Fleisch oder dergleichen, nicht mehr in den normalen Hausmüll entsorgt werden dürfen, sondern in sogenannten 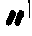 Biotonnen" separat gesammelt werden müssen. In diesen Biotonnen kommt es jedoch aufgrund des unter aeroben und/oder anaeroben Bedingungen erfolgenden Abbaus zur Schimmelbildung, wobei insbesondere bei längerem Stehen, auch in der Sonne und den dadurch entstehenden höheren Temperaturen, diese Schimmelbildung stark erhöht wird. Belastet durch diese Schimmelbildung sind zum einen diejenigen, die dann diese Küchenabfälle in diese Biotonne entleeren und entsorgen, bzw. die damit beauftragten Personen, die diese Biotonnen entleeren müssen.

Es kann dabei nicht ausgeschlossen werden, daß insbesondere durch Schimmelbildung Pilze der Gattung Aspergillus Infektionskrankheiten bei Menschen verursachen können (Aspergillose), die vorwiegend zu Erkrankungen der Atmungsorgane führt aber auch an Haut oder anderen Organen auftreten kann.

Um zu vermeiden, daß die mit der Füllung bzw. Entleerung der Biotonnen beauftragten Personen durch Kontakt oder Einatmung von Schimmelpilzsporen gesundheitlichen Schädigungen unterliegen, ist es daher erforderlich, Vorsichtsmaßnahmen zu treffen, damit auf ökologisch verträgliche Weise, insbesondere auch unter Ausschluß von toxischen organischen Substanzen wie Aceton diese Personen an das zu entleerende Gut herangehen können, ohne daß sie gesundheitlichen Gefährdungen unterworfen sind.

Aus der EP-A 0 619 365 ist ein Reinigungsmittel und ein Herstellungsverfahren bekannt, bei dem ein Gemisch aus kaltgepreßtem Orangenschalenöl, Citrusterpenen und Emulgatoren in einem spezifischen Verhältnis eingesetzt wird. Das bekannte Mittel dient im wesentlichen zur Reinigung von Teppichen und Teppichböden sowie Polsterstoffen und kann auch zur Reinigung von Fensterscheiben, Spiegeln, Waschbecken, Fliesen oder dergleichen eingesetzt werden.

Aus der Zeitschrift für Pflanzenkrankheiten und Pflanzenschutz, 100(1), Seiten 69 bis 74 (1993), ist eine Untersuchung über die Chemie und Fungitoxizität der etherischen Öle von Citrus sinensis (L.) Pers. bekannt, wobei ein durch Säulenchromatographie vom flüchtigen Öl aus der Fruchtschale von Citrus sinensis abgetrenntes Produkt gewonnen wurde, das antifungale Wirkung haben soll. Das verwendete in Aceton hergestellte Öl wurde unverdünnt eingesetzt und sein Einfluß auf verschiedene Pilze untersucht.

Aufgabe der Erfindung ist es daher, ein Citrusterpene enthaltendes Mittel bereitzustellen, das im wesentlichen physiologisch unbedenklich, biologisch abbaubar und einfach zu handhaben ist.

Erfindungsgemäß wird diese Aufgabe durch die Merkmale des Anspruchs 1 gelöst.

Bevorzugte Weiterbildungen sind den abhängigen Ansprüchen zu entnehmen.

Erfindungsgemäß enthält das Mittel von 40 bis 60 Gew.-% Citrusterpene, 15 bis 30 Gew.-% wasserlösliche Lösungsmittel, 10 bis 20 Gew.-% Tenside, 1 bis 5 Gew.-% quartäre Ammoniumverbindungen und Rest Wasser. Mit dieser erfindungsgemäßen Mischung wird zum einen die bekannte Wirkung der flüchtigen Öle aus Citruspflanzen genützt, wobei aufgrund des Einsatzes wasserlöslicher Lösungsmittel sowie Tenside zum einen eine günstige biologische Abbaubarkeit und physiologische Verträglichkeit sowie eine stabile Suspension der Citrusterpene in wäßriger Lösung erreicht werden kann.

Vorzugsweise ist das eingesetzte Citrusterpen α-Limonen, das unlöslich in Wasser ist, jedoch mischbar mit Alkohol und in der Natur sehr häufig in der (+)-Form zu 90% in Pomeranzen-, Kümmel-, Dill- und Zitronenöl oder dergleichen vorkommt. Aufgrund seines Vorkommens in pflanzlichen Produkten ist es auch hervorragend biologisch abbaubar.

Als das erfindungsgemäß eingesetzte wasserlösliche Mittel werden in der Regel Glykolether, Polyoxyethylene der Sorbitanester oder Ethoxylate von Fettalkoholen, hydriertem Rizinusöl oder Nonylphenol eingesetzt. Bevorzugt sind diejenigen Produkte, die physiologisch unbedenklich und biologisch relativ leicht abbaubar sind, wie zum Beispiel die von der ICI America Inc. hergestellten 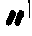 Tween®"-Polysorbate, die unter den Bezeichnungen Tween 20 und Tween 80 bekannt sind und ausgezeichnete physiologische und toxikologische Eigenschaften haben und aufgrund ihrer hohen Hydrophilie gut in Wasser löslich und dispergierbar sind. Aufgrund ihres Einsatzes in der Kosmetik und Pharmazie, als nicht-ionogene hydrophile Emulgatoren, Lösungsvermittler oder Netzmittel, und in der Lebensmittelindustrie sind diese Produkte physiologisch unbedenklich. Handelsüblich erhältliche Ethoxylate von Fettalkoholen bzw. hydriertem Rizinusöl bzw. Nonylphenol sind unter der Bezeichnung Cremophor® als ein Sortiment flüssiger bis pastöser oder wachsartiger Emulgatoren und Lösungsvermittler für die Kosmetik und Pharmazie bekannt. Diese nicht-ionogenen Emulgatoren zur Herstellung von Öl-in-Wasser-Emulsionen für Cremes bzw. zur Solubilisierung von Parfümölen und Vitaminen dienen üblicherweise in kosmetischen Produkten und sind somit ebenfalls physiologisch unbedenklich und biologisch abbaubar. Alternativ können auch die von der BASF vertriebenen Macrogol-Stearate eingesetzt werden.

Als das bevorzugte wasserlösliche Lösungsmittel wird üblicherweise Dipropylenglykolmonomethylether eingesetzt, von dem bekannt ist, daß er gering flüchtig, geruchsfrei und mit Wasser mischbar ist und in der Regel auch in kosmetischen Präparaten eingesetzt wird, so daß auch hier keine Bedenken an der physiologischen Unbedenklichkeit dieses Produktes bestehen.

Prinzipiell können erfindungsgemäß anionische, nicht-ionische und kationische Tenside allein und als Gemische eines oder mehrerer der vorstehend genannten Tenside eingesetzt werden. Die bevorzugten Tenside sind Fettalkoholethoxylate, Natriumlaurylsulfat oder reine Fettalkohole wie Cetylalkohol, aber auch Propylenglykoloctanoatdecanoat, die alle gutes Schaum-, Netz- und Waschvermögen besitzen und aufgrund ihrer Eigenschaften auch in biologischen Kläranlagen sowie in kosmetischen Präparaten eingesetzt werden und somit physiologisch unbedenklich und leicht biologisch abbaubar sind.

Handelsüblich erhältliche quartäre Ammoniumverbindungen werden durch Umsetzung tertärer Amine mit Alkylierungsmitteln wie Methylchlorid, Benzylchlorid, Dimethylsulfat, Dodecylbromid oder auch Ethylenoxid erhalten. Diese Verbindungen, die auch in kosmetischen Präparaten eingesetzt werden, weil sie physiologisch unbedenklich und leicht biologisch abbaubar sind, werden erfindungsgemäß eingesetzt, da ihre oberflächenaktiven Eigeschaften die Stabilisierung des Mittels fördern.

Gemäß einer bevorzugten Ausführungsform der Erfindung enthält das erfindungsgemäße Mittel von 50 bis 58 Gew.-% α-Limonen, 18 bis 25 Gew.-% Dipropylenglykolmonomethylether, 12 bis 17 Gew.-% eines Fettalkoholethoxylats, 2 bis 3,5 Gew.-% quartäre Ammoniumverbindungen sowie Rest Wasser. Üblicherweise hat das erfindungsgemäße Mittel einen neutralen pH-Wert von 7,5, einen Siedebereich von 121 bis 200°C nach DIN 51751,53171, einen Flammpunkt von ca. 47°C nach DIN 51755,51758, eine Selbstentzündlichkeit (fest/gasförmig) von 242°C nach DIN 51794, eine Dichte von ca. 0,87 g/cm³ bei 20°C und eine Viskosität von >30 mPa.s bei 20°C.

Erfindungsgemäß hat es sich als vorteilhaft erwiesen, das erfindungsgemäße Mittel in Verdünnung mit Wasser von 1:10 bis zu ca. 1:1000 einzusetzen, wobei eine stabile Suspension erreicht wird. Diese kann direkt in biologische Abfälle enthaltende Tonnen eingesprüht bzw. über handelsübliche Pumpsprühflaschen gleichmäßig auf dem zu behandelnden Gut aufgebracht werden. Durch eine kontinuierliche Behandlung nach jeweiligem neuem Einbringen von biologischem Abfall in einen solchen Behälter kommt es daher auch bei den dort gebildeten hohen Temperaturen zu einer starken Hemmung des Pilzwachstums und somit zu einer Verhinderung des Wachstums der gesundheitsgefährdenden Schimmelpilze. Als Nebeneffekt des erfindungsgemäßen Mittels wird der üblicherweise als negative Begleiterscheinung bei der Kompostierung bzw. Vergärung von biologischen Abfällen auftretende Geruch gebunden.

Bei verdünntem oder unverünntem Einsatz hat es sich gezeigt, daß vorteilhafterweise auch Schildläuse abgetötet und auch an Hauswänden sich entwickelnde Pilze weitgehend beseitigt oder zumindest deren Wachstum stark unterdrückt werden können. Auch im biologischen Pflanzenschutz ist das erfindungsgemäße Mittel aufgrund seiner guten biologischen Abbaubarkeit und die für den Menschen im wesentlichen physiologische Unbedenklichkeit in den vorstehend genannten Verdünnungen einsetzbar.

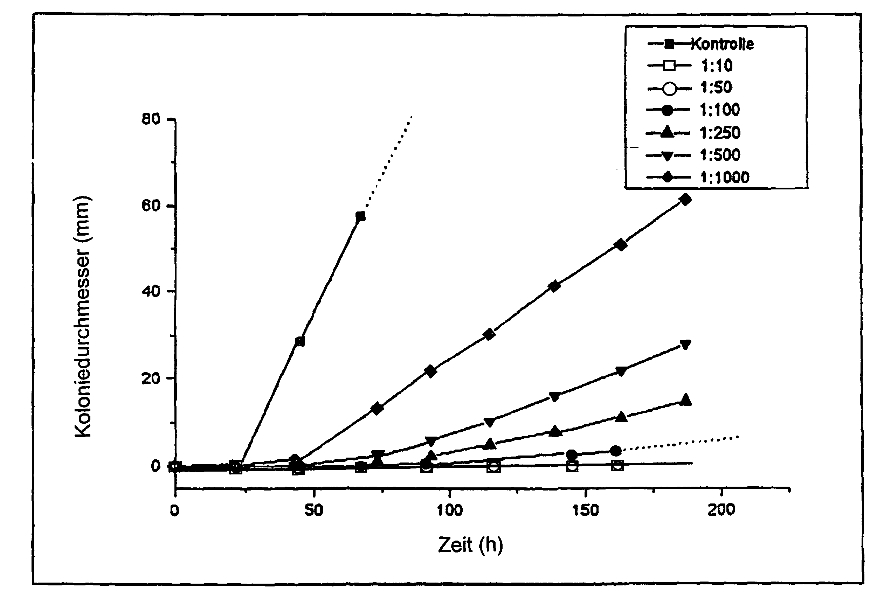

Die einzige Figur zeigt den Einfluß des erfindungsgemäßen Mittels auf den Koloniedurchmesser eines Pilzes in Abhängigkeit von der Konzentration des Mittels.

Die Erfindung wird nachfolgend anhand eines Beispiels näher erläutert.

Als Pilz wurde ein Stamm von *Aspergillus fumigatus* verwendet, der von der DSMZ (Braunschweig) bezogen wurde. Ausgewählt wurde der Stamm DSM 790, da dessen Wachstumsoptimum bei 37°C liegt, was den Temperaturverhältnissen in Biotonnen relativ nahe kommt.

Die Anzucht des Pilzes erfolgte auf Kartoffel-Dextrose-Agar bei 37°C. Eine Sporensuspension wurde hergestellt, die bei allen Experimenten eingesetzt wurde. Zu diesem Zwecke wurden 7 Tage alte Sporen von 2 bewachsenen Agarplatten mit einer Lösung aus 0,9% Kochsalz und 0,1% Tween® 80 abgeschwemmt und anschließend durch mehrfache Zentrifugation gereinigt. Der Einsatz des Tween® 80 hat den Effekt, das Zusammenkleben der Sporen zu verhindern.

Die Pilzsuspension wurde in definierten Schritten mit der vorstehend genannten Lösung aus 0,9% Kochsalz und 0,1% Tween® 80 verdünnt, so daß bei Ausplattieren zwischen 1 und 100 Kolonien pro Agarplatte erhalten wurden.

Die Keimzahlbestimmung und Messung der Koloniedurchmesser erfolgte auf Sabouraud-Agar, wobei die Bebrütung ebenfalls bei 37°C durchgeführt wurde.

In den vorher hergestellten Agar wurde die jeweils gewünschte Konzentration des erfindungsgemäßen fungizid wirkenden Mittels eingearbeitet, wobei noch vor dem Autoklavieren des noch flüssigen Nährmediums die mit Wasser in die gewünschte Konzentration verdünnte Citrusterpene enthaltende Emulsion zugegeben wurde. Das erfindungsgemäße Konzentrat wurde dabei in 1:10-, 1:50-, 1:100-, 1:250-, 1:500-sowie 1:1000-Verdünnungen eingesetzt, wobei sich die Angaben auf das Gewicht beziehen.

Auf die so vorbehandelten Agarplatten wurde die Pilzsuspension von *Aspergillus fumigatus* in der vorstehend beschriebenen Weise aufgebracht und die Keimzahlbestimmung nach ca. 48 bis 72 Stunden durch Zählen der gebildeten Kolonien unter Berücksichtigung der jeweiligen Verdünnungsstufe durchgeführt.

Um das Wachstum zu untersuchen, wurde ca. alle 24 Stunden der Koloniedurchmesser gemessen.

### Zusammensetzung des Kartoffel-Dextrose-Agars

- Kartoffelsuspension: 1000 ml
- Agar-Agar: 15 g
- Glucose: 20 g

Zur Herstellung der Kartoffelsuspension wurden 200 g geschälte Kartoffeln kleingeschnitten und 1 Stunde in 1000 ml Wasser gekocht. Anschließend wurde mit einem Pürierstab zerkleinert und die so entstandene Masse mit Wasser auf 1 Liter aufgefüllt.

### Sabouraud-Agar

- Pepton aus Fleisch: 5,0 g
- Caseinpepton: 5,0 g
- Agar-Agar: 15 g
- Glucose: 40 g
- Wasser: 1000 g

Aus den Ergebnissen der Figur ergibt sich, daß bei dem fungizid wirkenden Mittel gemäß der Erfindung in einer Verdünnung von 1:10 und 1:50 innerhalb von 8 Tagen kein Wachstum des Pilzes beobachtet werden konnte. Bei allen anderen eingesetzten Konzentrationen konnte die Keimzahl durch das erfindungsgemäße Mittel nicht total gesenkt werden, das Wachstum war allerdings erheblich gehemmt. Dieser Effekt zeigte sich sogar bei einer Verdünnung von 1:1000 noch deutlich (vgl. Figur, ―◆― ), so daß selbst bei dieser Konzentration noch von einer fungistatischen Wirkung des erfindungsgemäßen Mittels zu sprechen ist.

## Patentansprüche

1. Citrusterpene enthaltendes Mittel,
**dadurch gekennzeichnet, daß**
das Mittel von 40 bis 60 Gew.-% Citrusterpene, 15 bis 30 Gew.-% wasserlösliche Lösungsmittel, 10 bis 20 Gew.-% Tenside, 1 bis 5 Gew.-% quartäre Ammiumverbindungen und Rest Wasser enthält.

2. Mittel nach Anspruch 1,
**dadurch gekennzeichnet, daß**
das Citrusterpen α-Limonen ist.

3. Mittel nach Anspruch 1 oder 2,
**dadurch gekennzeichnet, daß**
das wasserlösliche Mittel ein Glykolether, ein Polyoxyethylenderivat einer Sorbitanesters oder ein Ethoxylat von Fettalkoholen, hydriertem Rizinusöl oder Nonylphenol ist.

4. Mittel nach einem der Ansprüche 1 bis 3,
**dadurch gekennzeichnet, daß**
das Tensid Fettalkoholetheroxylat, Natriumlaurylsulfat oder ein reiner Fettalkohol ist.

5. Verwendung des Citrusterpene enthaltenden Mittels nach einem der Ansprüche 1 bis 4 zur Behandlung von biologischen Abfällen, zum biologischen Pflanzenschutz und zur Bekämpfung schädlicher Insekten.

6. Verwendung nach Anspruch 5,
**dadurch gekennzeichnet, daß**
das Mittel in einer Konzentration von 1:10 bis 1:1000 eingesetzt wird.
